# EUROPEAN PATENT APPLICATION

(11) **EP 3 300 438 A1**
(43) Date of publication of application: **28.03.2018**
(21) Application number: 15895897.5
(22) Date of filing: 23.06.2015
(51) Int. Cl.: H04W 68/02

(54) **PAGING METHOD AND APPARATUS**

(71) Applicant: Huawei Technologies Co., Ltd., Longgang District Shenzhen, Guangdong 518129 (CN)
(72) Inventor: LU, Wei, Shenzhen Guangdong 518129 (CN)
(74) Representative: Epping - Hermann - Fischer
(86) International application number: PCT/CN2015/082064
(87) International publication number: WO 2016/205997

(57) **Abstract**

Embodiments of the present invention provide a paging method and apparatus. The method includes: obtaining type information of control signaling; determining a paging policy according to the type information of the control signaling; and sending a paging message to user equipment UE according to the paging policy. By using technical solutions in the present invention, the paging policy can be determined according to the type information of the control signaling, and then the paging message can be sent to the UE, so that refined and differentiated processing can be performed on paging triggered by control signaling corresponding to a service, to ensure that the service can be quickly and effectively performed.

## Description

### TECHNICAL FIELD

The present invention relates to communications technologies, and in particular, to a paging method and apparatus.

### BACKGROUND

To face a challenge from wireless broadband technologies and maintain a leading edge of a 3rd Generation Partnership Project (The 3rd Generation Partnership Project, 3GPP for short) network, the Long Term Evolution (Long Term Evolution, LTE for short) project of a mobile communications network is formulated in the 3GPP. Under guidance of the Long Term Evolution plan, a new mobile communications network architecture, that is, an architecture of a System Architecture Evolution (System Architecture Evolution, SAE for short) network system, is defined.

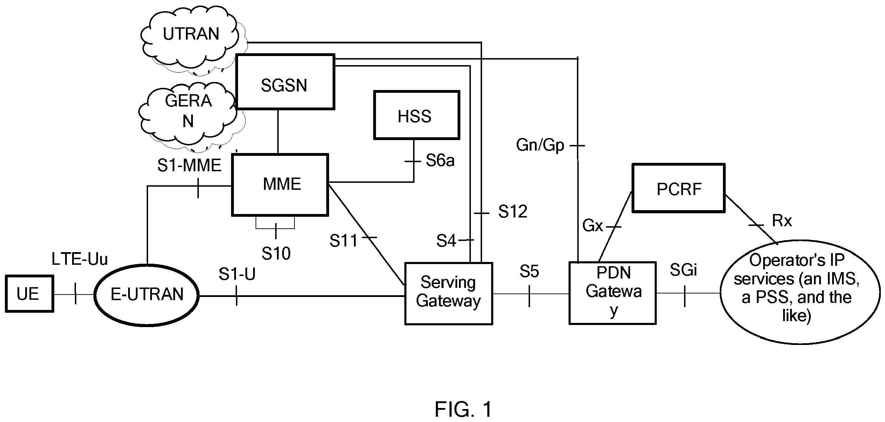

FIG. 1 is a schematic diagram of an SAE network system architecture in the prior art. As shown in FIG. 1, when user equipment (User Equipment, UE for short) accesses an SAE network system by using a serving general packet radio system service support node (Serving GPRS Support Node, SGSN for short), the UE may access a serving gateway (Serving Gateway, SGW for short) by using an S4 interface, and then access a packet data network gateway (Packet Data Network Gateway, PDN-GW or PGW for short) by using an S5 interface. Alternatively, the UE may directly access a PGW by using a Gn/Gp interface. Functions of main network elements in the SAE network system are described as follows:

A mobility management entity (Mobility Management Entity, MME for short) is to mainly complete functions in an evolved universal mobile telecommunications system terrestrial radio access network (Evolved UMTS Terrestrial Radio Access Network, E-UTRAN for short), such as UE mobility management, session management, non-access stratum (Non-Access Stratum, NAS for short) signaling encryption and integrity protection, and PGW/SGW selection. The MME is corresponding to a control plane part of an SGSN in the Universal Mobile Telecommunications System (Universal Mobile Telecommunications System, UMTS for short).

An SGW is mainly responsible for relaying a user service flow between UE and a PGW, and serves as an anchor point during handover between base stations.

A PGW is mainly responsible for user address allocation, policy control and charging rules enforcement, and a function related to lawful interception.

Policy and charging rules function (Policy and Charging Rules Function, PCRF for short) entity: The function entity determines a corresponding policy according to a restriction of a user access network, an operator policy, user subscription data, information about a service currently performed by a user, and the like; and provides the policy for a transport gateway for execution, so as to implement policy and charging control.

Operator's IP services (Operator's IP Services): The operator's IP services are implemented in an LTE network by using an IP multimedia subsystem (IP Multimedia Subsystem, IMS for short) network. In addition, a packet switched streaming service (Packet Switched Streaming Service, PSS for short) technology is a 3GPP-defined technology that is used for providing a streaming media service for a user. A PSS network architecture mainly includes a mobile terminal and a PSS server on a network side.

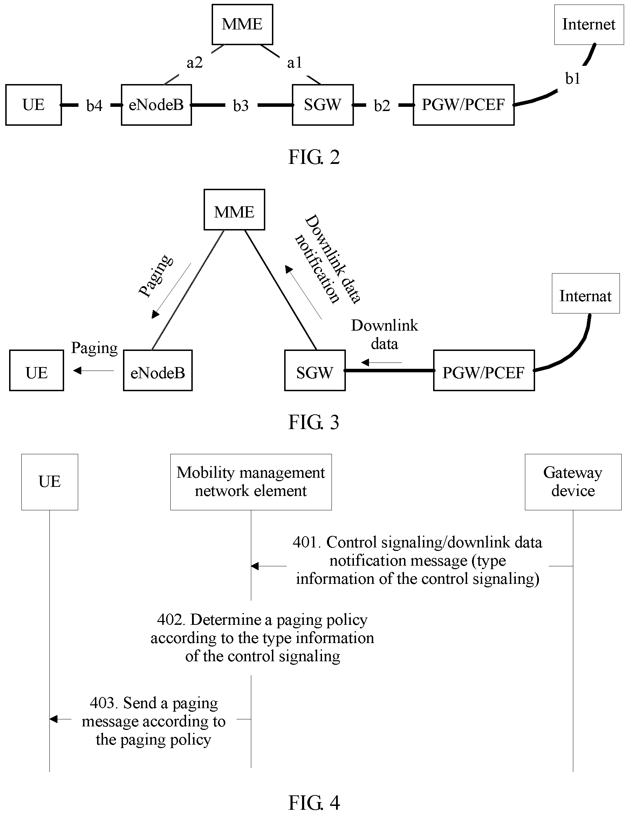

When UE performs service transmission, a schematic diagram of data transmission is shown in FIG. 2. Herein, b1, b2, b3, and b4 respectively represent bearers used for data transmission between two neighboring entities of a network, a PGW/PCEF, an SGW, an eNodeB, and the UE, and a1 and a2 respectively represent control signaling interaction between the SGW and an MME and that between the MME and the eNodeB. When the UE does not perform service transmission within a time period, the UE enters an idle state to save air interface resources and save UE power.

When the UE is in the idle state, a schematic diagram of data transmission is shown in FIG. 3. In this case, bearers related to an access network (the bearer between the UE and the eNodeB and the bearer between the eNodeB and the SGW) are temporarily deleted. When a downlink data packet needs to be sent to the UE, the downlink data packet is transmitted to the SGW by using the bearer between the network and the PGW/PCEF and the bearer between the PGW/PCEF and the SGW, and then the SGW sends a downlink data notification (Downlink Data Notification, DDN for short) to the MME. After receiving the DDN, the MME pages the UE by using an eNodeB in a tracking area in which the UE is located. After the UE receives a paging message, the UE initiates a service request process to resume the bearers related to the access network, so as to perform data transmission.

In addition to the downlink data packet that triggers the service request process to resume the bearers related to the access network, control signaling triggers a service request process to resume the bearers related to the access network. For example, the PGW/PCEF initiates a create bearer request/update bearer request message to the SGW. Then, processing by the SGW is classified into two cases:

A. When an idle mode signaling reduction (Idle Mode Signaling Reduction, ISR for short) mechanism is activated, the SGW caches signaling, and sends DDN to the MME. After the bearer is resumed, the SGW sends control signaling to the MME.

B. When an ISR mechanism is not activated, the SGW does not cache signaling. After receiving a create bearer request/update bearer request message from the PGW/PCEF, the SGW directly sends control signaling to the MME. The MME sends a paging message to the UE by using the eNodeB. After receiving the paging message, the UE initiates a service request process. Then, the MME initiates a corresponding signaling process to the eNodeB, for example, a create bearer request or update bearer request process. The signaling process may also be performed in combination with the service request or the like process.

In the two cases, differentiated processing cannot be implemented on paging in the prior art.

### SUMMARY

Embodiments of the present invention provide a paging method and apparatus, so as to perform refined and differentiated processing on paging triggered by control signaling corresponding to a service.

According to a first aspect, a paging method is provided, and includes:
obtaining type information of control signaling;
determining a paging policy according to the type information of the control signaling; and
sending a paging message to user equipment UE according to the paging policy.

In a first possible implementation of the first aspect, the obtaining type information of control signaling includes: receiving the control signaling sent by a gateway device, and determining the type information of the control signaling.

In a second possible implementation of the first aspect, the obtaining type information of control signaling includes: receiving a downlink data notification message sent by a gateway device, where the downlink data notification message includes the type information of the control signaling.

In a third possible implementation of the first aspect, the control signaling includes at least one of create-type control signaling, modify-type control signaling, delete-type control signaling, and release-type control signaling.

With reference to the first aspect, the first possible implementation of the first aspect, the second possible implementation of the first aspect, or the third possible implementation of the first aspect, in a fourth possible implementation of the first aspect, the paging policy includes at least one of a paging priority, a quantity of paging times, and a paging frequency.

According to a second aspect, a paging method is provided, and includes:
obtaining indication information of a paging policy;
obtaining the paging policy according to the indication information of the paging policy; and
sending a paging message to user equipment UE according to the paging policy.

In a first possible implementation of the second aspect, the obtaining indication information of a paging policy includes: receiving a downlink data notification message sent by a gateway device, where the downlink data notification message includes the indication information of the paging policy.

In a second possible implementation of the second aspect, the indication information of the paging policy includes indication information of the paging policy determined based on type information of control signaling or indication information of the paging policy determined based on service information corresponding to the control signaling.

With reference to the second possible implementation of the second aspect, in a third possible implementation of the second aspect, the control signaling includes at least one of create-type control signaling, modify-type control signaling, delete-type control signaling, and release-type control signaling.

With reference to the second aspect, the first possible implementation of the second aspect, the second possible implementation of the second aspect, or the third possible implementation of the second aspect, in a fourth possible implementation of the second aspect, the paging policy includes at least one of a paging priority, a quantity of paging times, and a paging frequency.

According to a third aspect, a paging method is provided, and includes:
obtaining service information corresponding to control signaling;
determining a paging policy according to the service information corresponding to the control signaling; and
sending a paging message to user equipment UE according to the paging policy.

In a first possible implementation of the third aspect, the obtaining service information corresponding to control signaling includes: receiving a downlink data notification message sent by a gateway device, where the downlink data notification message includes the service information corresponding to the control signaling.

In a second possible implementation of the third aspect, the obtaining service information corresponding to control signaling includes: receiving the control signaling sent by a gateway device, where the control signaling includes the service information corresponding to the control signaling.

With reference to the third aspect, the first possible implementation of the third aspect, or the second possible implementation of the third aspect, in a third possible implementation of the third aspect, the service information corresponding to the control signaling includes type information of a service corresponding to the control signaling; and the determining a paging policy according to the service information corresponding to the control signaling includes: determining the paging policy according to the type information of the service corresponding to the control signaling.

With reference to the third aspect, the first possible implementation of the third aspect, or the second possible implementation of the third aspect, in a fourth possible implementation of the third aspect, the service information corresponding to the control signaling includes priority information of a service corresponding to the control signaling; and the determining a paging policy according to the service information corresponding to the control signaling includes: determining the paging policy according to the priority information of the service corresponding to the control signaling.

With reference to the third aspect, the first possible implementation of the third aspect, or the second possible implementation of the third aspect, in a fifth possible implementation of the third aspect, the control signaling includes at least one of create-type control signaling, modify-type control signaling, delete-type control signaling, and release-type control signaling.

With reference to the third aspect, the first possible implementation of the third aspect, or the second possible implementation of the third aspect, in a sixth possible implementation of the third aspect, the paging policy includes at least one of a paging priority, a quantity of paging times, and a paging frequency.

According to a fourth aspect, a paging apparatus is provided, and includes:
an obtaining unit, configured to obtain type information of control signaling;
a processing unit, configured to determine a paging policy according to the type information of the control signaling; and
a sending unit, configured to send a paging message to user equipment UE according to the paging policy.

In a first possible implementation of the fourth aspect, the obtaining unit is specifically configured to receive the control signaling sent by a gateway device, and the processing unit is specifically configured to determine the type information of the control signaling.

In a second possible implementation of the fourth aspect, the obtaining unit is specifically configured to receive a downlink data notification message sent by a gateway device, where the downlink data notification message includes the type information of the control signaling.

According to a fifth aspect, a paging apparatus is provided, and includes:
an obtaining unit, configured to: obtain indication information of a paging policy, and obtain the paging policy according to the indication information of the paging policy; and
a sending unit, configured to send a paging message to user equipment UE according to the paging policy.

In a first possible implementation of the fifth aspect, the obtaining unit is specifically configured to receive a downlink data notification message sent by a gateway device, where the downlink data notification message includes the indication information of the paging policy.

In a second possible implementation of the fifth aspect, the sending unit is specifically configured to send the paging message to the UE according to indication information of the paging policy determined based on type information of control signaling.

In a third possible implementation of the fifth aspect, the sending unit is specifically configured to send the paging message to the UE according to indication information of the paging policy determined based on service information corresponding to the control signaling.

According to a sixth aspect, a paging apparatus is provided, and includes:
an obtaining unit, configured to obtain service information corresponding to control signaling;
a processing unit, configured to determine a paging policy according to the service information corresponding to the control signaling; and
a sending unit, configured to send a paging message to user equipment UE according to the paging policy.

In a first possible implementation of the sixth aspect, the obtaining unit is specifically configured to receive a downlink data notification message sent by a gateway device, where the downlink data notification message includes the service information corresponding to the control signaling.

In a second possible implementation of the sixth aspect, the obtaining unit is specifically configured to receive the control signaling sent by a gateway device, where the control signaling includes the service information corresponding to the control signaling.

With reference to the sixth aspect, the first possible implementation of the sixth aspect, or the second possible implementation of the sixth aspect, in a third possible implementation of the sixth aspect, the processing unit is specifically configured to determine the paging policy according to type information of a service corresponding to the control signaling.

With reference to the sixth aspect, the first possible implementation of the sixth aspect, or the second possible implementation of the sixth aspect, in a fourth possible implementation of the sixth aspect, the processing unit is specifically configured to determine the paging policy according to priority information of a service corresponding to the control signaling.

According to a seventh aspect, a paging apparatus is provided, and includes:
a processor, configured to: obtain type information of control signaling by using a first interface; determine a paging policy according to the type information of the control signaling; and send a paging message to user equipment UE according to the paging policy by using a second interface.

In a first possible implementation of the seventh aspect, the processor is specifically configured to: receive, by using the first interface, the control signaling sent by a gateway device; and determine the type information of the control signaling.

In a second possible implementation of the seventh aspect, the processor is specifically configured to receive, by using the first interface, a downlink data notification message sent by a gateway device, where the downlink data notification message includes the type information of the control signaling.

According to an eighth aspect, a paging apparatus is provided, and includes:
a processor, configured to: obtain indication information of a paging policy by using a first interface; obtain the paging policy according to the indication information of the paging policy; and send a paging message to user equipment UE according to the paging policy by using a second interface.

In a first possible implementation of the eighth aspect, the processor is specifically configured to receive, by using the first interface, a downlink data notification message sent by a gateway device, where the downlink data notification message includes the indication information of the paging policy.

In a second possible implementation of the eighth aspect, the processor is specifically configured to send the paging message to the UE by using the second interface and according to indication information of the paging policy determined based on type information of control signaling.

In a third possible implementation of the eighth aspect, the processor is specifically configured to send the paging message to the UE by using the second interface and according to indication information of the paging policy determined based on service information corresponding to the control signaling.

According to a ninth aspect, a paging apparatus is provided, and includes:
a processor, configured to: obtain, by using a first interface, service information corresponding to control signaling; determine a paging policy according to the service information corresponding to the control signaling; and send a paging message to user equipment UE according to the paging policy by using a second interface.

In a first possible implementation of the ninth aspect, the processor is specifically configured to receive, by using the first interface, a downlink data notification message sent by a gateway device, where the downlink data notification message includes the service information corresponding to the control signaling.

In a second possible implementation of the ninth aspect, the processor is specifically configured to receive, by using the first interface, the control signaling sent by a gateway device, where the control signaling includes the service information corresponding to the control signaling.

With reference to the ninth aspect, the first possible implementation of the ninth aspect, or the second possible implementation of the ninth aspect, in a third possible implementation of the ninth aspect, the processor is specifically configured to determine the paging policy according to type information of a service corresponding to the control signaling.

With reference to the ninth aspect, the first possible implementation of the ninth aspect, or the second possible implementation of the ninth aspect, in a fourth possible implementation of the ninth aspect, the processor is specifically configured to determine the paging policy according to priority information of a service corresponding to the control signaling.

According to the paging method and apparatus provided in the embodiments of the present invention, the type information of the control signaling or the service information corresponding to the control signaling can be obtained, the paging policy can be determined according to the type information of the control signaling or the service information corresponding to the control signaling, and then the paging message can be sent to the UE; or the indication information of the paging policy can be obtained, the paging policy can be obtained according to the indication information of the paging policy, and then the paging message can be sent to the UE, so that refined and differentiated processing can be performed on paging triggered by the control signaling corresponding to the service, to ensure that the service can be quickly and effectively performed. In addition, according to the method provided in the embodiments, a bearer binding mechanism of the service is not limited. Therefore, a bearer quantity does not increase in a communications network, and operator investment and operation management costs do not increase.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of an SAE network system architecture in the prior art;
FIG. 2 is a schematic diagram of data transmission when UE performs service transmission in the prior art;
FIG. 3 is a schematic diagram of data transmission when UE is in an idle state in the prior art;
FIG. 4 is a schematic diagram of a paging method according to a first embodiment of the present invention;
FIG. 5 is a schematic diagram of a paging method according to a second embodiment of the present invention;
FIG. 6 is a schematic diagram of a paging method according to a third embodiment of the present invention;
FIG. 7 is a schematic structural diagram of a paging apparatus according to a fourth embodiment of the present invention;
FIG. 8 is a schematic structural diagram of a paging apparatus according to a fifth embodiment of the present invention;
FIG. 9 is a schematic structural diagram of a paging apparatus according to a sixth embodiment of the present invention;
FIG. 10A is a schematic structural diagram of a paging apparatus according to a seventh embodiment of the present invention;
FIG. 10B is a schematic structural diagram of a paging apparatus according to an eighth embodiment of the present invention;
FIG. 11A is a schematic structural diagram of a paging apparatus according to a ninth embodiment of the present invention;
FIG. 11B is a schematic structural diagram of a paging apparatus according to a tenth embodiment of the present invention;
FIG. 12A is a schematic structural diagram of a paging apparatus according to an eleventh embodiment of the present invention; and
FIG. 12B is a schematic structural diagram of a paging apparatus according to a twelfth embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

FIG. 4 is a schematic diagram of a paging method according to a first embodiment of the present invention. As shown in FIG. 4, the method in this embodiment includes the following steps.

S401. A mobility management network element obtains type information of control signaling.

Optionally, in an LTE system architecture, the mobility management network element may include an MME.

Optionally, in a UMTS terrestrial radio access network (UMTS Terrestrial Radio Access Network, UTRAN for short) system architecture or a Global System for Mobile Communications/Enhanced Data rates for GSM Evolution radio access network (GSM/EDGE Radio Access Network, GERAN for short) system architecture, the mobility management network element may include an SGSN.

Optionally, that a mobility management network element obtains type information of control signaling may include: the mobility management network element receives the control signaling sent by a gateway device, and then determines the type information of the control signaling.

Optionally, that a mobility management network element obtains type information of control signaling may include: the mobility management network element receives a downlink data notification message sent by a gateway device, where the downlink data notification message includes the type information of the control signaling.

Optionally, in the LTE system architecture, the gateway device may include at least one of an SGW and a PGW.

Optionally, in the UTRAN system architecture or the GERAN system architecture, the gateway device may include a gateway GPRS support node (Gateway GPRS Support Node, GGSN for short).

Optionally, in the LTE system architecture, S401 may include: the MME receives the control signaling sent by the SGW or the PGW, and then determines the type information of the control signaling. Alternatively, S401 may include: the MME receives the downlink data notification message sent by the SGW or the PGW, where the downlink data notification message includes the type information of the control signaling. The type information of the control signaling can reflect differentiation of the control signaling. For example, type information obtained by classifying the control signaling in the following classification manners can reflect differentiation of the control signaling. For example, the control signaling may be classified in the following manners: 1. create-type control signaling, modify-type create signaling, delete-type control signaling, and release-type control signaling; 2. access point name (Access Point Name, APN for short) related control signaling, quality of service class identifier (QoS Class Identifier, QCI for short) related control signaling, and allocation/retention priority (Allocation/Retention Priority, ARP for short) related control signaling; 3. control signaling related to UE session mobility in a 3GPP access network, or in a non-3GPP access network, or between a 3GPP access network and a non-3GPP access network, control signaling for releasing a packet data network (Packet Data Network, PDN for short) connection or a bearer resource, other various session management process control signaling, and control signaling for requesting a new PDN connection or a new bearer resource. In this embodiment, alternatively, the control signaling may be classified in another manner. A specific implementation of classifying the control signaling is not limited in this embodiment.

Optionally, the control signaling may include at least one of the create-type control signaling, the modify-type control signaling, the delete-type control signaling, and the release-type control signaling.

Optionally, the control signaling may include at least one of the APN related control signaling, the QCI related control signaling, and the ARP related control signaling.

Optionally, the control signaling may include at least one of the control signaling related to UE session mobility in a 3GPP access network, or in a non-3GPP access network, or between a 3GPP access network and a non-3GPP access network, the control signaling for a PDN connection or a bearer resource, the other various session management process control signaling, and the control signaling for requesting a new PDN connection or a new bearer resource.

Optionally, the control signaling related to UE session mobility in a 3GPP access network, or in a non-3GPP access network, or between a 3GPP access network and a non-3GPP access network may include at least one of a create session request (create session request), a create session request with handover indication bit set (create session request with "handover" indication bit set), a modify bearer request (modify bearer request), a modify bearer request with handover indication bit set (modify bearer request with "handover" indication bit set), and a modify access bearer request (modify access bearer request).

Optionally, the control signaling for releasing a PDN connection or a bearer resource may include at least one of a delete session request (delete session request), a delete bearer request (delete bearer request), a delete bearer command (delete bearer command), and a delete indirect data forwarding tunnel request (delete indirect data forwarding tunnel request).

Optionally, the other various session management process control signaling may include at least one of a release access bearer request (release access bearer request), a modify bearer request (modify bearer request), a change notification (change notification), a suspend notification (suspend notification), and a resume notification (resume notification).

Optionally, the control signaling for requesting a new PDN connection or a new bearer resource may include at least one of a create session request during PDN connection request (create session request during PDN connection request), a create bearer request (create bearer request), an update bearer request (update bearer request), a bearer resource command (bearer resource command), a modify bearer command (modify bearer command), and a create indirect data forwarding tunnel request (create indirect data forwarding tunnel request).

S402. The mobility management network element determines a paging policy according to the type information of the control signaling.

Optionally, in the LTE system architecture, S402 may include: the MME determines the paging policy according to the type information of the control signaling.

S403. The mobility management network element sends a paging message to UE according to the paging policy.

Optionally, that the mobility management network element sends a paging message to UE according to the paging policy may include: the mobility management network element sends the paging message to the UE according to the paging policy by using a base station.

Optionally, in the LTE system architecture, S403 may include: the MME sends the paging message to the UE according to the paging policy. Alternatively, S403 may include: the MME sends the paging message to the UE according to the paging policy by using a base station.

Optionally, the paging policy may include but be not limited to at least one of a paging priority, a quantity of paging times, and a paging frequency. For example, a paging priority of a paging message triggered by create-type control signaling may be higher than a paging priority of a paging message triggered by modify-type control signaling, so as to improve user experience. A specific implementation of the paging policy is not limited in this embodiment. All information for guiding paging implementation may be referred to as a paging policy.

Optionally, in this embodiment, in the UTRAN system architecture or the GERAN system architecture, a function of the MME may be completed by an SGSN, and a function of the SGW/PGW may be completed by a GGSN.

In this embodiment, the mobility management network element can obtain the type information of the control signaling, determine the paging policy according to the type information of the control signaling, and then send the paging message to the UE, so that refined and differentiated processing can be performed on paging triggered by control signaling corresponding to a service, to ensure that the service can be quickly and effectively performed. In addition, according to the method provided in this embodiment, a bearer binding mechanism of the service is not limited. Therefore, a bearer quantity does not increase in a communications network, and operator investment and operation management costs do not increase.

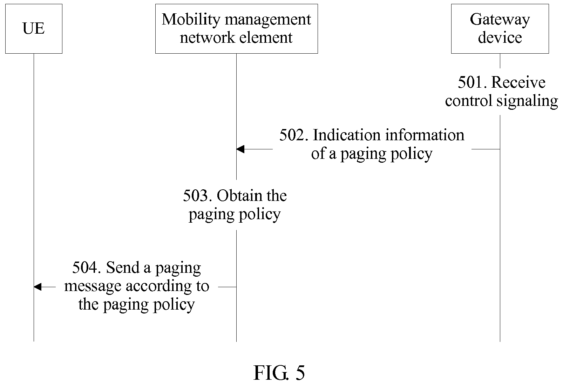

FIG. 5 is a schematic diagram of a paging method according to a second embodiment of the present invention. In this embodiment, for content the same as that in the first embodiment, refer to the detailed description in the first embodiment. Details are not described herein again. As shown in FIG. 5, the method in this embodiment includes the following steps.

S501. A gateway device receives control signaling.

Optionally, after receiving the control signaling, the gateway device may further determine type information of the control signaling.

Optionally, the control signaling may include the type information of the control signaling, and the gateway device may obtain the type information of the control signaling according to the received control signaling.

Optionally, the gateway device may further determine a paging policy according to the type information of the control signaling, and send indication information of the paging policy to a mobility management network element. The indication information enables the mobility management network element to obtain the paging policy according to the indication information.

Optionally, the control signaling may include indication information of the paging policy determined by an application function (Application Function, AF for short) entity according to service information corresponding to the control signaling. After determining the indication information of the paging policy according to the service information corresponding to the control signaling, the AF sends the indication information to the gateway device by using a PCRF entity and a policy and charging enforcement function (Policy and Charging Enforcement Function, PCEF for short) entity.

Optionally, the service information corresponding to the control signaling may include at least one of type information of a service corresponding to the control signaling and priority information of a service corresponding to the control signaling. The service corresponding to the control signaling may include a service triggering the control signaling.

Optionally, the paging policy may include but be not limited to at least one of a paging priority, a quantity of paging times, and a paging frequency.

S502. A mobility management network element obtains indication information of a paging policy.

Optionally, that a mobility management network element obtains indication information of a paging policy may include: the mobility management network element receives a downlink data notification message sent by the gateway device, where the downlink data notification message includes the indication information of the paging policy.

Optionally, the indication information of the paging policy may include indication information of the paging policy determined based on the type information of the control signaling.

Optionally, the indication information of the paging policy may include the indication information of the paging policy determined based on the service information corresponding to the control signaling.

Optionally, in an LTE system architecture, S502 may include: an MME obtains the indication information of the paging policy. Alternatively, S502 may include: an MME receives a downlink data notification message sent by an SGW or a PGW, where the downlink data notification message includes the indication information of the paging policy.

S503. The mobility management network element obtains the paging policy according to the indication information of the paging policy.

Optionally, in the LTE system architecture, S503 may include: the MME obtains the paging policy according to the indication information of the paging policy.

S504. The mobility management network element sends a paging message to UE according to the paging policy.

Optionally, that the mobility management network element sends a paging message to UE according to the paging policy may include: the mobility management network element sends the paging message to the UE according to the paging policy by using a base station.

Optionally, in the LTE system architecture, S504 may include: the MME sends the paging message to the UE according to the paging policy. Alternatively, S504 may include: the MME sends the paging message to the UE according to the paging policy by using a base station.

Optionally, in this embodiment, in a UTRAN system architecture or a GERAN system architecture, a function of the MME may be completed by an SGSN, and a function of the SGW/PGW may be completed by a GGSN.

In this embodiment, the mobility management network element can obtain the indication information of the paging policy by receiving the downlink data notification message. The indication information of the paging policy is corresponding to the type information of the control signaling or the service information corresponding to the control signaling. Therefore, the mobility management network element can send the paging message to the UE according to the paging policy, so that refined and differentiated processing can be performed on paging triggered by the control signaling corresponding to the service, to ensure that the service can be quickly and effectively performed. In addition, according to the method provided in this embodiment, a bearer binding mechanism of the service is not limited. Therefore, a bearer quantity does not increase in a communications network, and operator investment and operation management costs do not increase.

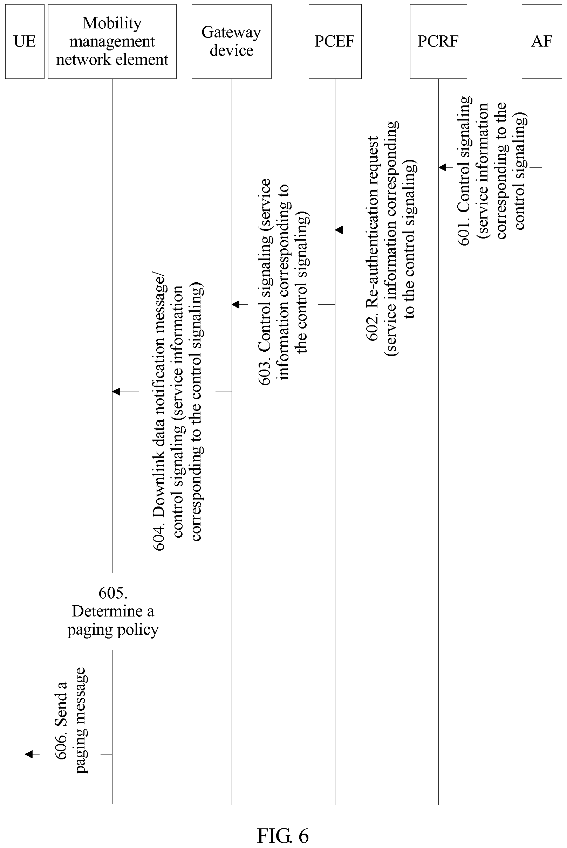

FIG. 6 is a schematic diagram of a paging method according to a third embodiment of the present invention. In this embodiment, for content the same as that in the first or the second embodiment, refer to the detailed description in the first or the second embodiment. Details are not described herein again. As shown in FIG. 6, the method in this embodiment includes the following steps.

S601. An AF entity sends control signaling to a PCRF entity, where the control signaling includes service information corresponding to the control signaling.

Optionally, the service information corresponding to the control signaling may include at least one of type information of a service corresponding to the control signaling and priority information of a service corresponding to the control signaling.

S602. The PCRF entity receives the control signaling sent by the AF entity. The PCRF entity sends a re-authentication request to a PCEF entity, where the re-authentication request includes the service information corresponding to the control signaling.

S603. The PCEF entity receives the re-authentication request sent by the PCRF entity. The PCEF entity sends the control signaling to a gateway device, where the control signaling includes the service information corresponding to the control signaling.

S604. The gateway device receives the control signaling sent by the PCEF entity. The gateway device sends a downlink data notification message or the control signaling to a mobility management network element, where the downlink data notification message or the control signaling includes the service information corresponding to the control signaling. The mobility management network element receives the downlink data notification message or the control signaling sent by the gateway device.

Optionally, in an LTE system architecture, S604 may include: an MME receives the downlink data notification message or the control signaling sent by an SGW, where the downlink data notification message or the control signaling includes the service information corresponding to the control signaling.

Optionally, the mobility management network element may further obtain, according to the downlink data notification message or the control signaling, the service information corresponding to the control signaling.

S605. The mobility management network element determines a paging policy according to the service information corresponding to the control signaling.

Optionally, that the mobility management network element determines a paging policy according to the service information corresponding to the control signaling may include: the mobility management network element determines the paging policy according to the type information of the service corresponding to the control signaling.

Optionally, that the mobility management network element determines a paging policy according to the service information corresponding to the control signaling may include: the mobility management network element determines the paging policy according to the priority information of the service corresponding to the control signaling.

Optionally, in the LTE system architecture, S605 may include: the MME determines the paging policy according to the service information corresponding to the control signaling. Alternatively, S605 may include: the MME determines the paging policy according to the type information of the service corresponding to the control signaling. Alternatively, S605 may include: the MME determines the paging policy according to the priority information of the service corresponding to the control signaling.

Optionally, the paging policy may include but be not limited to at least one of a paging priority, a quantity of paging times, and a paging frequency.

S606. The mobility management network element sends a paging message to UE according to the paging policy. The UE receives the paging message sent by the mobility management network element.

Optionally, that the mobility management network element sends a paging message to UE according to the paging policy may include: the mobility management network element sends the paging message to the UE according to the paging policy by using a base station.

Optionally, in the LTE system architecture, S606 may include: the MME sends the paging message to the UE according to the paging policy. Alternatively, S606 may include: the MME sends the paging message to the UE according to the paging policy by using a base station.

Optionally, in this embodiment, in a UTRAN system architecture or a GERAN system architecture, a function of the MME may be completed by an SGSN, and a function of the SGW/PGW may be completed by a GGSN.

In this embodiment, the mobility management network element can determine the paging policy according to the service information corresponding to the obtained control signaling, and then send the paging message to the UE, so that refined and differentiated processing can be performed on paging triggered by the control signaling corresponding to the service, to ensure that the service can be quickly and effectively performed. In addition, according to the method provided in this embodiment, a bearer binding mechanism of the service is not limited. Therefore, a bearer quantity does not increase in a communications network, and operator investment and operation management costs do not increase.

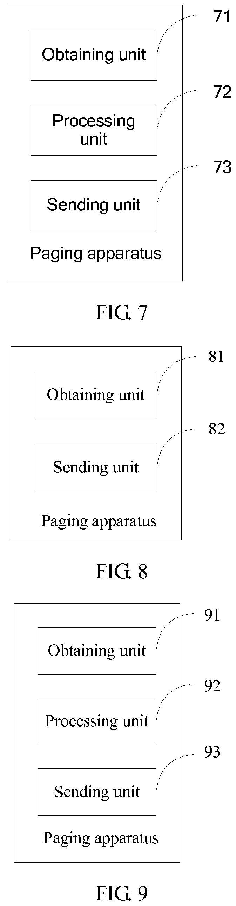

FIG. 7 is a schematic structural diagram of a paging apparatus according to a fourth embodiment of the present invention. As shown in FIG. 7, the apparatus provided in this embodiment includes an obtaining unit 71, a processing unit 72, and a sending unit 73.

The obtaining unit 71 is configured to obtain type information of control signaling.

The processing unit 72 is configured to determine a paging policy according to the type information of the control signaling.

The sending unit 73 is configured to send a paging message to UE according to the paging policy.

Optionally, the obtaining unit 71 is specifically configured to receive the control signaling sent by a gateway device, and the processing unit 72 is specifically configured to determine the type information of the control signaling.

Optionally, the obtaining unit 71 is specifically configured to receive a downlink data notification message sent by a gateway device, where the downlink data notification message includes the type information of the control signaling.

Optionally, in an LTE system architecture, the gateway device may include at least one of an SGW and a PGW. In a UTRAN system architecture or a GERAN system architecture, the gateway device may include a GGSN.

Optionally, the sending unit 73 is specifically configured to send the paging message to the UE according to the paging policy by using a base station.

Optionally, the control signaling may include at least one of create-type control signaling, modify-type control signaling, delete-type control signaling, and release-type control signaling.

Optionally, the control signaling may include at least one of APN related control signaling, QCI related control signaling, and ARP related control signaling.

Optionally, the control signaling may include at least one of control signaling related to UE session mobility in a 3GPP access network, or in a non-3GPP access network, or between a 3GPP access network and a non-3GPP access network, control signaling for releasing a PDN connection or a bearer resource, other various session management process control signaling, and control signaling for requesting a new PDN connection or a new bearer resource.

Optionally, the paging policy may include but be not limited to at least one of a paging priority, a quantity of paging times, and a paging frequency.

Optionally, the obtaining unit 71 may be a receiver, the processing unit 72 may be a processor, and the sending unit 73 may be a transmitter.

Optionally, the apparatus in this embodiment may be but be not limited to a mobility management network element. In an LTE system architecture, the mobility management network element may include an MME. In a UTRAN system architecture or a GERAN system architecture, the mobility management network element may include an SGSN.

The units in the apparatus provided in this embodiment may be configured to execute a corresponding procedure in the method shown in FIG. 4. A specific operating principle thereof is not described again. For details, refer to the description in the method embodiment.

The apparatus provided in this embodiment can obtain the type information of the control signaling, determine the paging policy according to the type information of the control signaling, and then send the paging message to the UE, so that refined and differentiated processing can be performed on paging triggered by control signaling corresponding to a service, to ensure that the service can be quickly and effectively performed. In addition, according to the apparatus provided in this embodiment, a bearer binding mechanism of the service is not limited. Therefore, a bearer quantity does not increase in a communications network, and operator investment and operation management costs do not increase.

FIG. 8 is a schematic structural diagram of a paging apparatus according to a fifth embodiment of the present invention. In this embodiment, for content the same as that in the fourth embodiment, refer to the detailed description in the fourth embodiment. Details are not described herein again. As shown in FIG. 8, the apparatus provided in this embodiment includes an obtaining unit 81 and a sending unit 82.

The obtaining unit 81 is configured to: obtain indication information of a paging policy, and obtain the paging policy according to the indication information of the paging policy.

The sending unit 82 is configured to send a paging message to UE according to the paging policy.

Optionally, the obtaining unit 81 is specifically configured to receive a downlink data notification message sent by a gateway device, where the downlink data notification message includes the indication information of the paging policy.

Optionally, the sending unit 82 is specifically configured to send the paging message to the UE according to indication information of the paging policy determined based on type information of control signaling.

Optionally, the sending unit 82 is specifically configured to send the paging message to the UE according to indication information of the paging policy determined based on service information corresponding to control signaling.

Optionally, the sending unit 82 is specifically configured to send the paging message to the UE according to the paging policy by using a base station.

Optionally, the control signaling may include at least one of create-type control signaling, modify-type control signaling, delete-type control signaling, and release-type control signaling.

Optionally, the control signaling may include at least one of APN related control signaling, QCI related control signaling, and ARP related control signaling.

Optionally, the control signaling may include at least one of control signaling related to UE session mobility in a 3GPP access network, and in a non-3GPP access network, or between a 3GPP access network and a non-3GPP access network, control signaling for releasing a PDN connection or a bearer resource, other various session management process control signaling, or control signaling for requesting a new PDN connection or a new bearer resource.

Optionally, the paging policy may include but be not limited to at least one of a paging priority, a quantity of paging times, and a paging frequency.

Optionally, in an LTE system architecture, the gateway device may include at least one of an SGW and a PGW. In a UTRAN system architecture or a GERAN system architecture, the gateway device may include a GGSN.

Optionally, the obtaining unit 81 may be a receiver, and the sending unit 82 may be a transmitter.

Optionally, the apparatus in this embodiment may be but be not limited to a mobility management network element. In an LTE system architecture, the mobility management network element may include an MME. In a UTRAN system architecture or a GERAN system architecture, the mobility management network element may include an SGSN.

The units in the apparatus provided in this embodiment may be configured to execute a corresponding procedure in the method shown in FIG. 5. A specific operating principle thereof is not described again. For details, refer to the description in the method embodiment.

The apparatus provided in this embodiment can obtain the indication information of the paging policy by receiving the downlink data notification message. The indication information of the paging policy is corresponding to the type information of the control signaling or the service information corresponding to the control signaling. Therefore, the apparatus provided in this embodiment can send the paging message to the UE according to the paging policy, so that refined and differentiated processing can be performed on paging triggered by control signaling corresponding to a service, to ensure that the service can be quickly and effectively performed. In addition, according to the apparatus provided in this embodiment, a bearer binding mechanism of the service is not limited. Therefore, a bearer quantity does not increase in a communications network, and operator investment and operation management costs do not increase.

FIG. 9 is a schematic structural diagram of a paging apparatus according to a sixth embodiment of the present invention. In this embodiment, for content the same as that in the fourth or the fifth embodiment, refer to the detailed description in the fourth or the fifth embodiment. Details are not described herein again. As shown in FIG. 9, the apparatus provided in this embodiment includes an obtaining unit 91, a processing unit 92, and a sending unit 93.

The obtaining unit 91 is configured to obtain service information corresponding to control signaling.

The processing unit 92 is configured to determine a paging policy according to the service information corresponding to the control signaling.

The sending unit 93 is configured to send a paging message to UE according to the paging policy.

Optionally, the obtaining unit 91 is specifically configured to receive a downlink data notification message sent by a gateway device, where the downlink data notification message includes the service information corresponding to the control signaling.

Optionally, the obtaining unit 91 is specifically configured to receive the control signaling sent by a gateway device, where the control signaling includes the service information corresponding to the control signaling.

Optionally, the service information corresponding to the control signaling may include type information of a service corresponding to the control signaling, and the processing unit 92 is specifically configured to determine the paging policy according to the type information of the service corresponding to the control signaling.

Optionally, the service information corresponding to the control signaling may include priority information of a service corresponding to the control signaling, and the processing unit 92 is specifically configured to determine the paging policy according to the priority information of the service corresponding to the control signaling.

Optionally, the control signaling may include at least one of create-type control signaling, modify-type control signaling, delete-type control signaling, andrelease-type control signaling.

Optionally, the control signaling may include at least one of APN related control signaling, QCI related control signaling, and ARP related control signaling.

Optionally, the control signaling may include at least one of control signaling related to UE session mobility in a 3GPP access network, or in a non-3GPP access network, or between a 3GPP access network and a non-3GPP access network, control signaling for releasing a PDN connection or a bearer resource, other various session management process control signaling, and control signaling for requesting a new PDN connection or a new bearer resource.

Optionally, the paging policy may include but be not limited to at least one of a paging priority, a quantity of paging times, and a paging frequency.

Optionally, in an LTE system architecture, the gateway device may include at least one of an SGW and a PGW. In a UTRAN system architecture or a GERAN system architecture, the gateway device may include a GGSN.

Optionally, the obtaining unit 91 may be a receiver, the processing unit 92 may be a processor, and the sending unit 93 may be a transmitter.

Optionally, the apparatus in this embodiment may be but be not limited to a mobility management network element. In an LTE system architecture, the mobility management network element may include an MME. In a UTRAN system architecture or a GERAN system architecture, the mobility management network element may include an SGSN.

The units in the apparatus provided in this embodiment may be configured to execute a corresponding procedure in the method shown in FIG. 6. A specific operating principle thereof is not described again. For details, refer to the description in the method embodiment.

The apparatus provided in this embodiment can determine the paging policy according to the service information corresponding to the obtained control signaling, and then send the paging message to the UE, so that refined and differentiated processing can be performed on paging triggered by the control signaling corresponding to the service, to ensure that the service can be quickly and effectively performed. In addition, according to the apparatus provided in this embodiment, a bearer binding mechanism of the service is not limited. Therefore, a bearer quantity does not increase in a communications network, and operator investment and operation management costs do not increase.

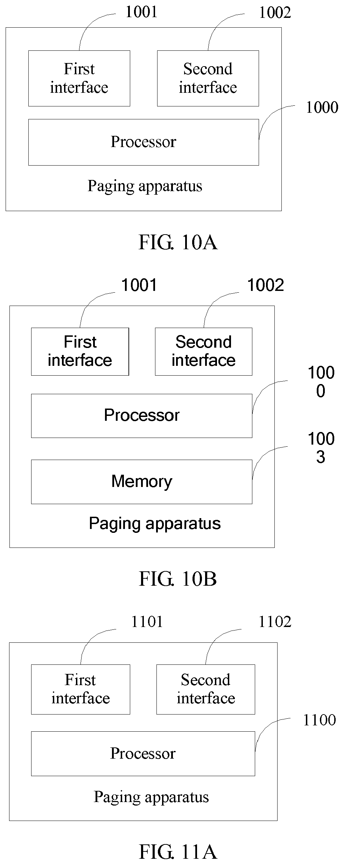

FIG. 10A is a schematic structural diagram of a paging apparatus according to a seventh embodiment of the present invention. As shown in FIG. 10A, the apparatus provided in this embodiment includes a processor 1000.

The processor 1000 is configured to: obtain type information of control signaling by using a first interface 1001; determine a paging policy according to the type information of the control signaling; and send a paging message to UE according to the paging policy by using a second interface 1002.

Optionally, the processor 1000 is specifically configured to receive, by using the first interface 1001, the control signaling sent by a gateway device; and may be configured to determine the type information of the control signaling.

Optionally, the processor 1000 is specifically configured to receive, by using the first interface 1001, a downlink data notification message sent by a gateway device, where the downlink data notification message includes the type information of the control signaling.

Optionally, in an LTE system architecture, the gateway device may include at least one of an SGW and a PGW. In a UTRAN system architecture or a GERAN system architecture, the gateway device may include a GGSN.

Optionally, the processor 1000 is specifically configured to send the paging message to the UE according to the paging policy by using the second interface 1002 and by using a base station.

Optionally, the control signaling may include at least one of create-type control signaling, modify-type control signaling, delete-type control signaling, and release-type control signaling.

Optionally, the control signaling may include at least one of APN related control signaling, QCI related control signaling, and ARP related control signaling.

Optionally, the control signaling may include at least one of control signaling related to UE session mobility in a 3GPP access network, or in a non-3GPP access network, or between a 3GPP access network and a non-3GPP access network, control signaling for releasing a PDN connection or a bearer resource, other various session management process control signaling, and control signaling for requesting a new PDN connection or a new bearer resource.

Optionally, the paging policy may include but be not limited to at least one of a paging priority, a quantity of paging times, and a paging frequency.

Optionally, the apparatus in this embodiment may be but be not limited to a mobility management network element. In an LTE system architecture, the mobility management network element may include an MME. In a UTRAN system architecture or a GERAN system architecture, the mobility management network element may include an SGSN.

Optionally, the first interface 1001 may be an S11 interface in an SAE network system architecture, and the second interface 1002 may be an S1-MME interface in the SAE network system architecture.

The elements in the apparatus provided in this embodiment may be configured to execute a corresponding procedure in the method shown in FIG. 4. A specific operating principle thereof is not described again. For details, refer to the description in the method embodiment.

Optionally, based on the apparatus provided in the seventh embodiment, as shown in FIG. 10B, an apparatus provided in an eighth embodiment of the present invention further includes a memory 1003. The memory 1003 is configured to store an instruction that can be executed by the processor. The instruction stored in the memory 1003 enables the processor 1000 to execute a corresponding procedure in the method shown in FIG. 4. A specific operating principle thereof is not described again. For details, refer to the description in the method embodiment.

The apparatus provided in this embodiment can obtain the type information of the control signaling, determine the paging policy according to the type information of the control signaling, and then send the paging message to the UE, so that refined and differentiated processing can be performed on paging triggered by control signaling corresponding to a service, to ensure that the service can be quickly and effectively performed. In addition, according to the apparatus provided in this embodiment, a bearer binding mechanism of the service is not limited. Therefore, a bearer quantity does not increase in a communications network, and operator investment and operation management costs do not increase.

FIG. 11A is a schematic structural diagram of a paging apparatus according to a ninth embodiment of the present invention. In this embodiment, for content the same as that in the seventh or the eighth embodiment, refer to the detailed description in the seventh or the eighth embodiment. Details are not described herein again. As shown in FIG. 11A, the apparatus provided in this embodiment includes a processor 1100.

The processor 1100 is configured to: obtain indication information of a paging policy by using a first interface 1101; obtain the paging policy according to the indication information of the paging policy; and send a paging message to UE according to the paging policy by using a second interface 1102.

Optionally, the processor 1100 is specifically configured to receive, by using the first interface 1101, a downlink data notification message sent by a gateway device, where the downlink data notification message includes the indication information of the paging policy.

Optionally, the processor 1100 is specifically configured to send the paging message to the UE by using the second interface 1102 and according to indication information of the paging policy determined based on type information of control signaling.

Optionally, the processor 1100 is specifically configured to send the paging message to the UE by using the second interface 1102 and according to indication information of the paging policy determined based on service information corresponding to control signaling.

Optionally, the processor 1100 is specifically configured to send the paging message to the UE according to the paging policy by using the second interface 1102 and by using a base station.

Optionally, the control signaling may include at least one of create-type control signaling, modify-type control signaling, delete-type control signaling, and release-type control signaling.

Optionally, the control signaling may include at least one of APN related control signaling, QCI related control signaling, and ARP related control signaling.

Optionally, the control signaling may include at least one of control signaling related to UE session mobility in a 3GPP access network, or in a non-3GPP access network, or between a 3GPP access network and a non-3GPP access network, control signaling for releasing a PDN connection or a bearer resource, other various session management process control signaling, and control signaling for requesting a new PDN connection or a new bearer resource.

Optionally, the paging policy may include but be not limited to at least one of a paging priority, a quantity of paging times, and a paging frequency.

Optionally, in an LTE system architecture, the gateway device may include at least one of an SGW and a PGW. In a UTRAN system architecture or a GERAN system architecture, the gateway device may include a GGSN.

Optionally, the apparatus in this embodiment may be but be not limited to a mobility management network element. In an LTE system architecture, the mobility management network element may include an MME. In a UTRAN system architecture or a GERAN system architecture, the mobility management network element may include an SGSN.

Optionally, the first interface 1101 may be an S11 interface in an SAE network system architecture, and the second interface 1102 may be an S1-MME interface in the SAE network system architecture.

The elements in the apparatus provided in this embodiment may be configured to execute a corresponding procedure in the method shown in FIG. 5. A specific operating principle thereof is not described again. For details, refer to the description in the method embodiment.

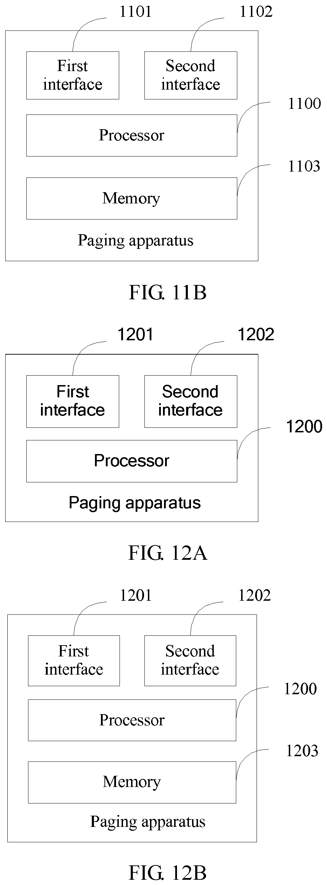

Optionally, based on the apparatus provided in the ninth embodiment, as shown in FIG. 11B, an apparatus provided in a tenth embodiment of the present invention further includes a memory 1103. The memory 1103 is configured to store an instruction that can be executed by the processor. The instruction stored in the memory 1103 enables the processor 1100 to execute a corresponding procedure in the method shown in FIG. 5. A specific operating principle thereof is not described again. For details, refer to the description in the method embodiment.

The apparatus provided in this embodiment can obtain the indication information of the paging policy by receiving the downlink data notification message. The indication information of the paging policy is corresponding to the type information of the control signaling or the service information corresponding to the control signaling. Therefore, the apparatus provided in this embodiment can send the paging message to the UE according to the paging policy, so that refined and differentiated processing can be performed on paging triggered by control signaling corresponding to a service, to ensure that the service can be quickly and effectively performed. In addition, according to the apparatus provided in this embodiment, a bearer binding mechanism of the service is not limited. Therefore, a bearer quantity does not increase in a communications network, and operator investment and operation management costs do not increase.

FIG. 12A is a schematic structural diagram of a paging apparatus according to an eleventh embodiment of the present invention. In this embodiment, for content the same as that in the seventh, the eighth, the ninth, or the tenth embodiment, refer to the detailed description in the seventh, the eighth, the ninth, or the tenth embodiment. Details are not described herein again. As shown in FIG. 12A, the apparatus provided in this embodiment includes a processor 1200.

The processor 1200 is configured to: obtain, by using a first interface 1201, service information corresponding to control signaling; determine a paging policy according to the service information corresponding to the control signaling; and send a paging message to UE according to the paging policy by using a second interface 1202.

Optionally, the processor 1200 is specifically configured to receive, by using the first interface 1201, a downlink data notification message sent by a gateway device, where the downlink data notification message includes the service information corresponding to the control signaling.

Optionally, the processor 1200 is specifically configured to receive, by using the first interface 1201, the control signaling sent by a gateway device, where the control signaling includes the service information corresponding to the control signaling.

Optionally, the service information corresponding to the control signaling may include type information of a service corresponding to the control signaling, and the processor 1200 is specifically configured to determine the paging policy according to the type information of the service corresponding to the control signaling.

Optionally, the service information corresponding to the control signaling may include priority information of a service corresponding to the control signaling, and the processor 1200 is specifically configured to determine the paging policy according to the priority information of the service corresponding to the control signaling.

Optionally, the control signaling may include at least one of create-type control signaling, modify-type control signaling, delete-type control signaling, and release-type control signaling.

Optionally, the control signaling may include at least one of APN related control signaling, QCI related control signaling, and ARP related control signaling.

Optionally, the control signaling may include at least one of control signaling related to UE session mobility in a 3GPP access network, or in a non-3GPP access network, or between a 3GPP access network and a non-3GPP access network, control signaling for releasing a PDN connection or a bearer resource, other various session management process control signaling, and control signaling for requesting a new PDN connection or a new bearer resource.

Optionally, the paging policy may include but be not limited to at least one of a paging priority, a quantity of paging times, and a paging frequency.

Optionally, in an LTE system architecture, the gateway device may include at least one of an SGW and a PGW. In a UTRAN system architecture or a GERAN system architecture, the gateway device may include a GGSN.

Optionally, the apparatus in this embodiment may be but be not limited to a mobility management network element. In an LTE system architecture, the mobility management network element may include an MME. In a UTRAN system architecture or a GERAN system architecture, the mobility management network element may include an SGSN.

Optionally, the first interface 1201 may be an S11 interface in an SAE network system architecture, and the second interface 1202 may be an S1-MME interface in the SAE network system architecture.

The elements in the apparatus provided in this embodiment may be configured to execute a corresponding procedure in the method shown in FIG. 6. A specific operating principle thereof is not described again. For details, refer to the description in the method embodiment.

Optionally, based on the apparatus provided in the eleventh embodiment, as shown in FIG. 12B, an apparatus provided in a twelfth embodiment of the present invention further includes a memory 1203. The memory 1203 is configured to store an instruction that can be executed by the processor. The instruction stored in the memory 1203 enables the processor 1200 to execute a corresponding procedure in the method shown in FIG. 6. A specific operating principle thereof is not described again. For details, refer to the description in the method embodiment.

The apparatus provided in this embodiment can determine the paging policy according to the service information corresponding to the obtained control signaling, and then send the paging message to the UE, so that refined and differentiated processing can be performed on paging triggered by the control signaling corresponding to the service, to ensure that the service can be quickly and effectively performed. In addition, according to the apparatus provided in this embodiment, a bearer binding mechanism of the service is not limited. Therefore, a bearer quantity does not increase in a communications network, and operator investment and operation management costs do not increase.

It should be understood that user equipment UE in the embodiments of the present invention may include a handheld device, an in-vehicle device, a wearable device, or a computing device that has a radio communication function; another processing device connected to a wireless modem; or user equipment (User Equipment, UE for short) in various forms, including a mobile station (Mobile Station, MS for short), a terminal (Terminal), terminal equipment (Terminal Equipment), and the like. For ease of description, in this application, these devices are simply referred to as user equipment or UE.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A paging method, comprising:
obtaining type information of control signaling;
determining a paging policy according to the type information of the control signaling; and sending a paging message to user equipment UE according to the paging policy.

2. The method according to claim 1, wherein the obtaining type information of control signaling comprises:
receiving the control signaling sent by a gateway device, and determining the type information of the control signaling.

3. The method according to claim 1, wherein the obtaining type information of control signaling comprises:
receiving a downlink data notification message sent by a gateway device, wherein the downlink data notification message comprises the type information of the control signaling.

4. The method according to claim 1, wherein the control signaling comprises at least one of create-type control signaling, modify-type control signaling, delete-type control signaling, and release-type control signaling.

5. The method according to any one of claims 1 to 4, wherein the paging policy comprises at least one of a paging priority, a quantity of paging times, and a paging frequency.

6. A paging method, comprising:
obtaining indication information of a paging policy;
obtaining the paging policy according to the indication information of the paging policy; and
sending a paging message to user equipment UE according to the paging policy.

7. The method according to claim 6, wherein the obtaining indication information of a paging policy comprises:
receiving a downlink data notification message sent by a gateway device, wherein the downlink data notification message comprises the indication information of the paging policy.

8. The method according to claim 6, wherein the indication information of the paging policy comprises indication information of the paging policy determined based on type information of control signaling or indication information of the paging policy determined based on service information corresponding to the control signaling.

9. The method according to claim 8, wherein the control signaling comprises at least one of create-type control signaling, modify-type control signaling, delete-type control signaling, and release-type control signaling.

10. The method according to any one of claims 6 to 9, wherein the paging policy comprises at least one of a paging priority, a quantity of paging times, and a paging frequency.

11. A paging method, comprising:
obtaining service information corresponding to control signaling;
determining a paging policy according to the service information corresponding to the control signaling; and
sending a paging message to user equipment UE according to the paging policy.

12. The method according to claim 11, wherein the obtaining service information corresponding to control signaling comprises:
receiving a downlink data notification message sent by a gateway device, wherein the downlink data notification message comprises the service information corresponding to the control signaling.

13. The method according to claim 11, wherein the obtaining service information corresponding to control signaling comprises:
receiving the control signaling sent by a gateway device, wherein the control signaling comprises the service information corresponding to the control signaling.

14. The method according to any one of claims 11 to 13, wherein the service information corresponding to the control signaling comprises type information of a service corresponding to the control signaling; and
the determining a paging policy according to the service information corresponding to the control signaling comprises:
determining the paging policy according to the type information of the service corresponding to the control signaling.

15. The method according to any one of claims 11 to 13, wherein the service information corresponding to the control signaling comprises priority information of a service corresponding to the control signaling; and
the determining a paging policy according to the service information corresponding to the control signaling comprises:
determining the paging policy according to the priority information of the service corresponding to the control signaling.

16. The method according to any one of claims 11 to 13, wherein the control signaling comprises at least one of create-type control signaling, modify-type control signaling, delete-type control signaling, and release-type control signaling.

17. The method according to any one of claims 11 to 13, wherein the paging policy comprises at least one of a paging priority, a quantity of paging times, and a paging frequency.

18. A paging apparatus, comprising:
an obtaining unit, configured to obtain type information of control signaling;
a processing unit, configured to determine a paging policy according to the type information of the control signaling; and
a sending unit, configured to send a paging message to user equipment UE according to the paging policy.

19. The apparatus according to claim 18, wherein the obtaining unit is specifically configured to receive the control signaling sent by a gateway device, and the processing unit is specifically configured to determine the type information of the control signaling.

20. The apparatus according to claim 18, wherein the obtaining unit is specifically configured to receive a downlink data notification message sent by a gateway device, wherein the downlink data notification message comprises the type information of the control signaling.

21. A paging apparatus, comprising:
an obtaining unit, configured to: obtain indication information of a paging policy, and obtain the paging policy according to the indication information of the paging policy; and
a sending unit, configured to send a paging message to user equipment UE according to the paging policy.

22. The apparatus according to claim 21, wherein the obtaining unit is specifically configured to receive a downlink data notification message sent by a gateway device, wherein the downlink data notification message comprises the indication information of the paging policy.

23. The apparatus according to claim 21, wherein the sending unit is specifically configured to send the paging message to the UE according to indication information of the paging policy determined based on type information of control signaling.

24. The apparatus according to claim 21, wherein the sending unit is specifically configured to send the paging message to the UE according to indication information of the paging policy determined based on service information corresponding to the control signaling.

25. A paging apparatus, comprising:
an obtaining unit, configured to obtain service information corresponding to control signaling;
a processing unit, configured to determine a paging policy according to the service information corresponding to the control signaling; and
a sending unit, configured to send a paging message to user equipment UE according to the paging policy.

26. The apparatus according to claim 25, wherein the obtaining unit is specifically configured to receive a downlink data notification message sent by a gateway device, wherein the downlink data notification message comprises the service information corresponding to the control signaling.

27. The apparatus according to claim 25, wherein the obtaining unit is specifically configured to receive the control signaling sent by a gateway device, wherein the control signaling comprises the service information corresponding to the control signaling.

28. The apparatus according to any one of claims 25 to 27, wherein the processing unit is specifically configured to determine the paging policy according to type information of a service corresponding to the control signaling.

29. The apparatus according to any one of claims 25 to 27, wherein the processing unit is specifically configured to determine the paging policy according to priority information of a service corresponding to the control signaling.
